(19) Europäisches Patentamt

European Patent Office

Office européen des brevets

(11) **EP 0 963 638 B1**

(12) **FASCICULE DE BREVET EUROPEEN**

(45) Date de publication et mention
de la délivrance du brevet:
**05.10.2005 Bulletin 2005/40**

(51) Int Cl.⁷: **H04L 9/32**

(86) Numéro de dépôt international:
**PCT/FR1998/002680**

(21) Numéro de dépôt: **98959943.6**

(22) Date de dépôt: **10.12.1998**

(87) Numéro de publication internationale:
**WO 1999/033220 (01.07.1999 Gazette 1999/26)**

(54) **PROCEDE DE SIGNATURE NUMERIQUE**

VERFAHREN ZUR DIGITALEN UNTERSCHRIFT

DIGITAL SIGNATURE METHOD

(84) Etats contractants désignés:
**BE CH DE DK ES GB GR IT LI LU NL PT SE**

(30) Priorité: **18.12.1997 FR 9716061**

(43) Date de publication de la demande:
**15.12.1999 Bulletin 1999/50**

(73) Titulaire: **ETAT FRANCAIS Représenté par le Délégué Général pour l'Armement 00460 Armées (FR)**

(72) Inventeur: **JOUX, Antoine F-35235 Thorigne-Fouillard (FR)**

(56) Documents cités:
**EP-A- 0 384 475**

## Description

La présente invention a notamment pour objet un procédé de génération d'une signature numérique (c,d) d'un message M ainsi qu'un procédé d'authentification d'une telle signature.

Les procédés de signature numérique visent à certifier l'origine d'un document électronique. De manière similaire à une signature manuscrite, une signature numérique est jointe à un message électronique pour garantir son authenticité. Considérons le cas pratique où une entité A d'un système de communication désire adresser un message M à une entité B. Dans une première phase de génération de la signature, l'émetteur A, après avoir écrit son message, effectue un ensemble d'opérations mathématiques fonction du message M à signer et d'opérandes qui peuvent aussi bien être secrètes que publiques. Ces calculs vont permettre de générer une entité numérique que l'on appellera la signature. Le message M, ainsi que sa signature, sont ensuite transmis électroniquement. Dans une seconde phase, après réception du message et de la signature, le destinataire B effectue à son tour des opérations mathématiques. Le résultat de ces derniers calculs permet de vérifier la validité de la signature reçue. Il est à noter que le but de la fonction de signature est d'assurer l'authentification d'un message M et non pas d'assurer la confidentialité de son contenu. Ce message peut donc être transmis soit en clair, soit transmis en chiffré par une fonction de chiffrement complètement indépendante du mécanisme de signature.

Globalement, un procédé de signature numérique permet, dans un système de communication moderne, de :

    (a) Authentifier de manière certaine l'identité de l'émetteur du message.
    (b) Assurer l'intégrité du contenu d'un message (on vérifie que le message n'a pas été altéré durant sa transmission).

Dans les procédés de signature numérique, la sécurité est fondée sur l'extrême difficulté pour inverser certaines fonctions mathématiques. En effet, étant donné la puissance de calcul actuelle des ordinateurs, il est aujourd'hui impossible de résoudre certaines de ces équations sans connaître les éléments secrets de l'algorithme.

A ce jour il existe plusieurs types de procédés de signature numérique.

Un premier type, développé par Rivest-Shamir-Adelman, repose sur la difficulté de factoriser des nombres entiers de grande taille (voir "A method for obtaining digital signatures and public key cryptosystems", Communications of the ACM, Février 1978, Volume 21, N° 2, pp. 120-126, et le brevet américain 4,405,829 qui s'y réfère).

Un deuxième type développé par Taher El-Gamal propose des algorithmes de signature fondés sur le problème du logarithme discret faisant intervenir une exponentiation discrète (voir "A Public Key Cryptosystem and a signature scheme based on discrete logarithms" IEEE Trans. on Inform Theory, vol IT-31, pp. 469-472, juillet 1985).

L'exponentiation discrète comporte trois arguments, la base de l'exponentiation g, l'exposant x et le modulo N. Le problème du logarithme discret consiste, étant donné la relation mathématique: $Y = g^x$ modulo N (qui signifie : Y est le reste de la division de $g^x$ par N), à retrouver x lorsque l'on connaît N, g et Y.

Un procédé du même type mais plus simple a été divulgué par Schnorr et a fait l'objet du brevet US 4,995,082. Il se distingue de celui de El-Gamal par le fait qu'il consiste à réduire la taille des exposants des exponentiations discrètes pour accélérer les calculs. Pour cela, un élément g engendre un sous-groupe d'ordre q, avec q sur 160 bits par exemple. De plus, une fonction de hachage est utilisée dans le calcul de la signature.

La signature numérique ainsi générée est de petite taille.

D'une manière générale, l'exponentiation discrète peut être, selon les cas, soit une exponentiation modulaire dans laquelle on travaille alors avec des entiers avec pour modulo un nombre bien choisi, soit une multiplication par un entier sur une courbe elliptique qui est une opération similaire à une exponentiation modulaire, mais qui est définie sur un groupe noté additivement et non multiplicativement.

Dans de nombreuses applications, la signature numérique ainsi que sa vérification doivent être réalisées en temps réel. certains procédés, comme celui de El-Gamal nécessitent de lourds investissements matériels car les algorithmes requièrent des machines très puissantes. Pour se soustraire à ces contraintes matérielles, l'optimisation des algorithmes permet d'alléger la complexité des calculs tout en conservant une sécurité comparable.

La solution de l'exponentiation discrète est aujourd'hui la plus utilisée dans les systèmes cryptographiques et certaines améliorations ont été apportées sur les algorithmes pour augmenter la rapidité des temps de calcul tout en conservant une sécurité maximale.

Dans cette perspective, réduire la taille (le nombre de bits) de l'exposant est très important car le temps de calcul de l'exponentiation modulaire est proportionnel à cette taille.

D'autre part, dans les algorithmes connus à ce jour, le cardinal du groupe dans lequel on travaille doit être connu. Le cardinal de ce groupe est fonction du choix du modulo N. La sécurité de l'algorithme reposant sur l'exponentiation discrète, il est nécessaire de rendre impossible sa résolution. Cette sécurité implique certaines contraintes sur le choix du modulo N.

Dans le cas d'une exponentiation modulaire, la sécurité de l'exponentiation discrète n'offrait, selon l'état de la technique connue, que deux possibilités sur le choix du modulo N.

Dans le cadre de la première possibilité, N est un produit de deux nombres premiers. El-Gamal propose de choisir N de telle sorte que (N-1)/2 soit premier et le diviseur retenu est (N-1).

La deuxième possibilité concerne les algorithmes à base d'exponentiation discrète où un sous-groupe doit être connu ainsi que son cardinal, le cardinal de ce sous-groupe étant un diviseur de N-1 si N est premier, ou un diviseur du nombre de points sur la courbe dans le cas d'une courbe elliptique. Schnorr propose de choisir q comme cardinal du sous-groupe, q étant tel qu'il divise N-1.

L'invention palie ces inconvénients en proposant un procédé apte à diminuer la complexité des calculs et permettant de travailler en temps réel avec un ordinateur du type PC.

Elle remédie en outre aux limitations précitées, le choix du modulo N n'étant plus limité aux deux possibilités précitées ou le calcul du nombre de point sur la courbe elliptique n'étant plus nécessaire.

Pour cela, un procédé de génération d'une signature numérique (c,d) d'un message M consiste à :

- définir un modulo N et une base g, une clé publique Y et une clé privé x, ces paramètres N, g, Y et x étant liés par la relation :

$$Y=g^X \pmod N$$

- à définir une fonction de hachage H dont la taille du résultat comporte S bits
- à choisir un nombre r de T bits avec

$$T>= 2S$$

- à calculer u d'après la relation suivante :

$$u=g^r * Y^z$$

où

$$Z=2^S$$

- à hacher par la fonction H la concaténation de M et u, le nombre ainsi obtenu étant la valeur c de la signature,
- à calculer la valeur d de la signature par la relation:

$$d=r+c*x.$$

Selon une caractéristique additionnelle permettant encore de réduire les temps de calcul, le message M est haché par une fonction $h_1$ avant d'être haché par la fonction H puis concaténé avec u, les fonctions $h_1$ et H pouvant éventuellement être identiques.

Selon une caractéristique particulière, la clé privée x est définie avant la clé publique Y, cette dernière étant alors calculée par la relation :

$$Y=g^x \pmod N$$

Selon une autre caractéristique la clé publique Y est définie avant la clé privée x, et le modulo N est choisi non premier.

Selon une autre caractéristique, le nombre r est un nombre aléatoire.

L'invention concerne en outre un procédé d'authentification de la signature numérique (c,d) d'un message M générée selon l'invention, ce procédé étant caractérisé en ce qu'il consiste, connaissant la clé publique Y, le modulo N et la base g et la fonction de hachage H donc la valeur de S, à :

- calculer u par la relation

$$u=g^d * Y^{(z-c)}$$

avec

$$Z=2^S$$

- à hacher par la fonction H la concaténation de M et u,
- à vérifier que la valeur ainsi obtenue est égale à c dans le cas où la signature est authentique.

Selon une caractéristique additionnelle de ce procédé, le message M est haché par la fonction h1 avant d'être haché par la fonction H puis concaténé avec u.

D'autres avantages et caractéristiques de la présente invention apparaîtront dans la description d'un mode particulier de réalisation de l'invention, au regard des figures annexées parmi lesquelles :

- la figure 1 montre un schéma d'un procédé de génération d'une signature numérique,
- la figure 2 présente un schéma d'un procédé d'authentification d'une signature numérique générée selon le procédé montré à la figure 1.

Le procédé selon l'invention est, entre autres, utilisé pour générer et vérifier la signature d'un message M. Indépendamment des phases de signature et de vérification de la signature, une autorité, garante de la sécurité au sein du système de communication, fixe les paramètres généraux suivants :

a) Le modulo N. La taille de ce modulo est fixée par des considérations liées à la sécurité de l'algorithme (aujourd'hui, 1024 bits est un bon choix). Ce modulo peut être commun à plusieurs utilisateurs (éventuellement en grand nombre) au sein du cryptosystème. Ce modulo peut être selon les variantes un nombre premier ou non, une courbe elliptique, ou plus généralement un groupe pour lequel l'exponentiation discrète est difficile à inverser.

b) La base g. C'est un générateur du sous-groupe du groupe déterminé par le modulo N (nombre modulo N, point sur la courbe elliptique, élément du groupe choisi). Le sous-groupe engendré doit être de cardinalité grande (>$2^S$, où S est la taille du résultat de H, la fonction de hachage explicitée dans la suite), mais ce n'est pas forcément tout le groupe modulo N. Tout comme N, g peut-être commun à plusieurs utilisateurs.

La cardinalité doit être grande mais sa connaissance n'est pas nécessaire aux algorithmes de signature et de vérification. Il est alors possible de travailler avec l'exponentiation comme opération de base et en même temps de choisir N comme produit de nombres premiers.

Les paramètres N et g sont des paramètres généraux fixés une fois pour toutes et communs à des groupes d'utilisateurs. Ils n'ont pas de caractère secret car leur simple connaissance ne permet pas de déjouer la sécurité de l'algorithme.

Le responsable du cryptosystème associe à chaque utilisateur une paire de clefs qui lui sont propres. La clef x est appelée clef privée et Y clef publique. La clef x ne doit être connue que par son utilisateur. Lui seul l'utilise lors de la phase de génération de la signature. La clé Y est publique. Elle est propre à l'émetteur A du message. Chaque utilisateur, lorsqu'il reçoit un message de A, est informé de l'identité de l'émetteur. A l'aide d'un annuaire des clefs, il peut donc retrouver la clef Y qui est associée à l'émetteur du message et l'utiliser dans la phase de vérification de la signature. La clef Y propre à l'entité A est donc utilisée à la fois par l'entité A et par l'entité B. Les deux clefs sont liées par le fait que Y est le résultat de l'exponentiation discrète ayant pour base g, pour exposant x et pour modulo N. Ils sont liés par la relation suivante :

$$Y = g^x \ (\text{mod } N)$$

Dans les deux options décrites ci-après et relatives au choix de x et de Y, la clef privée est connue de l'utilisateur de la clef et de lui seul. Si la clef privée est divulguée, le problème du logarithme discret disparaît et le système n'est plus sécurisé.

Selon la première option, les clés privée et publique sont choisies en fixant x de taille S bits (par exemple S = 160 si on choisit pour H le standard SHA), puis on calcule Y avec la relation précédente. Cette variante permet d'utiliser des clefs privées de petite taille (160 bits par exemple), et de travailler sur une courbe elliptique sans avoir besoin de calculer préalablement le cardinal de cette courbe.

Selon la deuxième option, on commence par fixer Y par exemple en le dérivant du nom de l'utilisateur (voir Maurer et Yacobi, Non-interactive public-key cryptography, EUROCRYPT'91, Lecture Notes in Computet Science, Springer-Verlag, vol. 547, pages 498-507, 1991) puis on en déduit x par un calcul de logarithme discret modulo N. Cette méthode implique d'utiliser pour N un nombre non premier, N = pq, afin que le calcul de logarithme soit faisable. Elle impose également de ne pas disséminer la décomposition N = pq pour que le calcul ne puisse pas être réalisé par n'importe qui. Le procédé de signature présenté ici permet de ne pas révéler p et q contrairement aux autres procédés connus. En effet, dans ces derniers, il faut que chacun connaisse le cardinal du groupe multiplicatif modulo N, c'est à dire (p-1)(q-1), or la connaissance de (p-1)(q-1) permet de retrouver p et q.

L'autorité responsable du cryptosystème impose une fonction de hachage H, commune à tous les utilisateurs. Celle-ci est utilisée pour transformer tout nombre de taille quelconque en un nombre de S bits. Le choix de H et de S est indépendant de l'algorithme et on peut donc reprendre indifféremment toute fonction de hachage connue à ce jour.

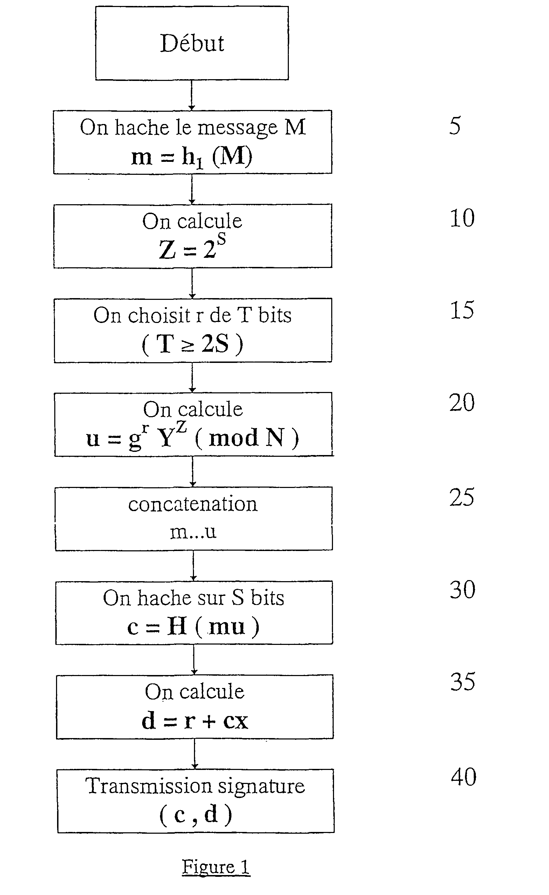

Cette phase préliminaire étant achevée, nous considérerons désormais deux entités A et B désirant établir une liaison sécurisée dans le système d'information. Dans la première étape, décrite d'après la figure 1, l'entité A va calculer une signature numérique , représentée par le couple (c,d), à partir du message M qu'elle désire transmettre à l'entité B. Cette étape de signature est entièrement réalisé par l'entité A.

Le message M, potentiellement très long, est éventuellement transformé par une fonction de hachage $h_1$ quelconque pour donner le résultat m.

On pose alors Z = $2^S$, S étant fixé par le choix de la fonction de hachage.

On choisit au hasard un nombre aléatoire r de T bits (avec T fixé et T >= 2S)

On calcule le nombre u avec la relation suivante :

$$u = g^r Y^Z \ (\text{mod } N)$$

On concatène les nombres m et u par une simple juxtaposition.

On hache le résultat de la concaténation de m et u à l'aide de la fonction de hachage H. On note c le nombre formé des S bits du résultat.

On calcule le nombre d par la relation suivante :

$$d = r + cx$$

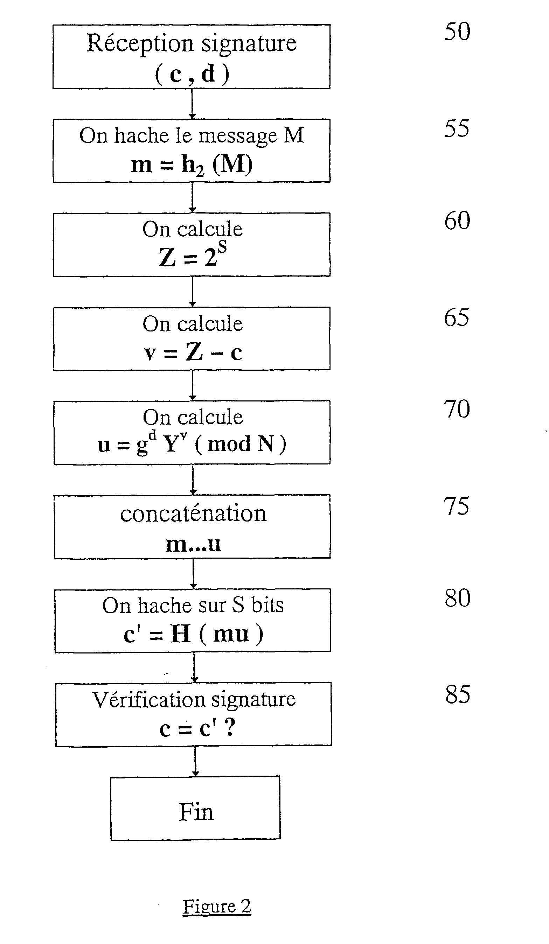

Le couple (c,d) représente la signature du message. Cette signature est transmise en plus du message M à l'entité B. Ici commence la deuxième étape, l'étape d'authentification de la signature qui est décrite au regard de la figure 2. Elle est entièrement réalisée par l'entité B.

Après réception de la signature (c,d) et du message M qui lui correspond, le message M peut être haché par la fonction de hachage $h_1$.

On pose alors $Z = 2^S$, S étant fixé par le choix de la fonction de hachage.

On calcule le nombre v par la formule suivante :

$$v = Z - c$$

On calcule le nombre u par la formule suivante :

$$u = g^d Y^v \pmod{N}$$

On concatène les nombres m et u.

On hache sur S bits le résultat de la concaténation par la fonction de hachage H. Le résultat obtenu est noté c'.

On vérifie alors la signature envoyée par l'entité A. Si c=c', alors l'émetteur du message M ne peut être que l'entité A, sous réserve que la clé secrète x de l'entité A n'a pas été révélée. Dans le cas contraire, si c et c' sont différents, le message a été falsifié.

**Revendications**

1. Procédé de génération d'une signature numérique (c,d) d'un message M consistant à :

   - définir un modulo N et une base g, une clé publique Y et une clé privée x, ces paramètres N, g, Y et x étant liés par la relation :

   $$Y = g^x \pmod{N}$$

   - à définir une fonction de hachage H dont la taille du résultat comporte S bits
   - à choisir un nombre r de T bits avec

   $$T \geq 2S \, ;$$

   ledit procédé étant **caractérisé en ce qu'**il consiste en outre :

   - à calculer u d'après la relation suivante :

   $$u = g^r * Y^Z$$

   où

   $$Z = 2^S$$

   - à hacher par la fonction H la concaténation de M et u, le nombre ainsi obtenu étant la valeur c de la signature,
   - à calculer la valeur d de la signature par la relation:

   $$d = r + c*x.$$

2. Procédé de génération d'une signature numérique (c,d) d'un message M selon la revendication 1, **caractérisé en ce que** le message M est haché par une fonction h1 avant d'être haché par la fonction H puis concaténé avec u.

3. Procédé de génération d'une signature numérique (c,d) d'un message M selon la revendication 2, **caractérisé en ce que** les fonctions H et h1 sont identiques.

4. Procédé de génération d'une signature numérique (c,d) d'un message M selon l'une quelconque des revendications 1 et 3, **caractérisé en ce que** la clé privée x est définie avant la clé publique Y, cette dernière étant alors calculée par la relation :

   $$Y = g^x \pmod{N}$$

5. Procédé de génération d'une signature numérique (c,d) d'un message M selon l'une quelconque des revendications 1 et 3, **caractérisé en ce que** la clé publique Y est définie avant la clé privée x, et **en ce que** le modulo N est choisi non premier,

6. Procédé de génération d'une signature numérique (c,d) d'un message M selon l'une quelconque des revendication 1 à 5, **caractérisé en ce que** le nombre r est un nombre aléatoire.

7. Procédé d'authentification de la signature numérique (c,d) d'un message M générée selon un procédé selon l'une quelconque des revendications 1 à 6, **caractérisé en ce qu'**il consiste, connaissant la clé publique Y, le modulo N et la base g et la fonction de hachage H donc la valeur de S, à :

- calculer u par la relation

$$u = g^d * Y^{(z-c)}$$

avec

$$Z = 2^S$$

- à hacher par la fonction H la concaténation de M et u,
- à vérifier que la valeur ainsi obtenue est égale à c dans le cas où la signature est authentique.

8. Procédé d'authentification de la signature numérique (c,d) d'un message M selon la revendication 7, **caractérisé en ce que** le message M est haché par la fonction h1 avant d'être haché par la fonction H puis concaténé avec u.

9. Procédé d'authentification de la signature numérique (c,d) d'un message M selon la revendication 8, **caractérisé en ce que** les fonctions H et h1 sont identiques.

**Patentansprüche**

1. Verfahren für die Erzeugung einer digitalen Signatur (c, d) einer Nachricht M, das darin besteht:

    - ein Modulo N und eine Basis g, einen öffentlichen Schlüssel Y und einen privaten Schlüssel x zu definieren, wobei diese Parameter N, g, Y und x durch die folgende Beziehung miteinander verbunden sind:

    $$Y = g^x \ (\text{mod } N)$$

    - eine Hashfunktion H zu definieren, bei der die Größe des Ergebnisses S Bits enthält,

    - eine Zahl r aus T Bits mit $T \geq 25$ zu wählen;

    wobei das Verfahren **dadurch gekennzeichnet ist, dass** es außerdem darin besteht:

    - u gemäß der folgenden Beziehung zu berechnen:

    $$u = g^r * Y^Z,$$

    wobei

$$Z = 2^S$$

- die Verkettung von M und u durch die Funktion H zu hashen, wobei die auf diese Weise erhaltene Zahl der Wert c der Signatur ist,

- den Wert d der Signatur durch die Beziehung: d = r + c * x zu berechnen.

2. Verfahren für die Erzeugung einer digitalen Signatur (c, d) einer Nachricht M nach Anspruch 1, **dadurch gekennzeichnet, dass** die Nachricht M durch eine Funktion h1 gehashed wird, bevor sie durch die Funktion H gehashed und dann mit u verkettet wird.

3. Verfahren für die Erzeugung einer digitalen Signatur (c, d) einer Nachricht M nach Anspruch 2, **dadurch gekennzeichnet, dass** die Funktionen H und h 1 identisch sind.

4. Verfahren für die Erzeugung einer digitalen Signatur (c, d) einer Nachricht M nach einem der Ansprüche 1 und 3, **dadurch gekennzeichnet, dass** der private Schlüssel x vor dem öffentlichen Schlüssel Y definiert wird, wobei dieser letztere Schlüssel dann durch die Beziehung:

$$Y = g^x \ (\text{mod } N)$$

    berechnet wird.

5. Verfahren für die Erzeugung einer digitalen Signatur (c, d) einer Nachricht M nach einem der Ansprüche 1 und 3, **dadurch gekennzeichnet, dass** der öffentliche Schlüssel Y vor dem privaten Schlüssel x definiert wird und dass für das Modulo N keine Primzahl gewählt wird.

6. Verfahren für die Erzeugung einer digitalen Signatur (c, d) einer Nachricht M nach einem der Ansprüche 1 bis 5, **dadurch gekennzeichnet, dass** die Zahl r eine Zufallszahl ist.

7. Verfahren zur Authentisierung der digitalen Signatur (c, d) einer Nachricht M, die gemäß dem Verfahren nach einem der Ansprüche 1 bis 6 erzeugt wird, **dadurch gekennzeichnet, dass** es bei Kenntnis des öffentlichen Schlüssels Y, des Modulos N und der Basis g sowie der Hashfunktion H und daher des Wertes S darin besteht:

    - u durch die Beziehung

$$u = g^d * Y^{(Z-c)}$$

zu berechnen, wobei

$$Z = 2^S$$

- die Verkettung von M und u durch die Funktion H zu hashen,

- zu verifizieren, dass der auf diese Weise erhaltene Wert gleich c ist, falls die Signatur authentisch ist.

8. Verfahren zur Authentisierung der digitalen Signatur (c, d) einer Nachricht M nach Anspruch 7, **dadurch gekennzeichnet, dass** die Nachricht M durch die Funktion h1 gehashed wird, bevor sie durch die Funktion H gehashed und dann mit u verkettet wird.

9. Verfahren zur Authentisierung der digitalen Signatur (c, d) einer Nachricht M nach Anspruch 8, **dadurch gekennzeichnet, dass** die Funktionen H und h1 identisch sind.


**Claims**

1. Method of generating a digital signature (c, d) of a message M, consisting of:

   - defining a modulus N and a base g, a public key Y and a private key x, these parameters N, g, Y and x being linked by the relation:

   $$Y = g^x \ (mod \ N)$$

   - defining a hash function H of which the size of the result is S bits

   - choosing a number r of T bits with

   $$T >= 2S;$$

   the said method being **characterized in that** it consists additionally of:

   - calculating u according to the following relation:

   $$u = g^r * y^Z$$

   where

   $$Z = 2^S$$

- hashing, by the function H, the concatenation of M and u, the number thus obtained being the value c of the signature,

- calculating the value d of the signature by the relation:

$$d = r + c*x.$$

2. Method of generating a digital signature (c, d) of a message M according to Claim 1, **characterized in that** the message M is hashed by a function h1 before being hashed by the function H and then concatenated with u.

3. Method of generating a digital signature (c, d) of a message M according to Claim 2, **characterized in that** the functions H and h1 are identical.

4. Method of generating a digital signature (c, d) of a message M according to any one of Claims 1 and 3, **characterized in that** the private key x is defined before the public key Y, which is then calculated by the relation:

$$Y = g^x \ (mod \ N)$$

5. Method of generating a digital signature (c, d) of a message M according to any one of Claims 1 and 3, **characterized in that** the public key Y is defined before the private key x, and **in that** the modulus N is chosen not to be prime.

6. Method of generating a digital signature (c, d) of a message M according to any one of Claims 1 to 5, **characterized in that** the number r is a random number.

7. Method of authenticating the digital signature (c, d) of a message M which is generated according to a method according to any one of Claims 1 to 6, **characterized in that** it consists, knowing the public key Y, the modulus N, the base g and the hash function H and therefore the value of S, of:

   - calculating u by the relation:

   $$u = g^d * y^{(Z-C)}$$

   where

   $$Z = 2^S$$

   - hashing, by the function H, the concatenation of M and u,

- verifying that the value thus obtained equals c in the case that the signature is authentic.

8. Method of authenticating the digital signature (c, d) of a message M according to Claim 7, **characterized in that** the message M is hashed by the function h1 before being hashed by the function H and then concatenated with u.

9. Method of authenticating the digital signature (c, d) of a message M according to Claim 8, **characterized in that** the functions H and h1 are identical.

Début

On hache le message M
$$m = h_1 (M)$$

On calcule
$$Z = 2^S$$

On choisit r de T bits
$$( T \geq 2S )$$

On calcule
$$u = g^r Y^Z ( \bmod N )$$

concatenation
m...u

On hache sur S bits
$$c = H ( mu )$$

On calcule
$$d = r + cx$$

Transmission signature
$$( c , d )$$

Figure 1

Réception signature
$$( c , d )$$

50

On hache le message M
$$m = h_2 (M)$$

55

On calcule
$$Z = 2^S$$

60

On calcule
$$v = Z - c$$

65

On calcule
$$u = g^d Y^v ( mod N )$$

70

concaténation
$$m...u$$

75

On hache sur S bits
$$c' = H ( mu )$$

80

Vérification signature
$$c = c' ?$$

85

Fin

Figure 2